# EUROPÄISCHE PATENTSCHRIFT

(11) **EP 1 484 133 B1**
(45) Veröffentlichungstag und Bekanntmachung des Hinweises auf die Patenterteilung: **12.07.2006**
(21) Anmeldenummer: 04011545.3
(22) Anmeldetag: 14.05.2004
(51) Int. Cl.: B23Q 11/08, B23Q 17/24, G02B 27/01

(54) **Werkzeug- oder Produktionsmaschine mit durchsichtiger Scheibe und Head-up-Display**
Machine tool or production machine with transparent screen and head-up display
Machine de production ou machine-outil avec une vitre transparente et système d'affichage tête-haute

(30) Priorität: 06.06.2003 DE 10325895
(43) Veröffentlichungstag der Anmeldung: 08.12.2004
(73) Patentinhaber: SIEMENS AKTIENGESELLSCHAFT, 80333 München (DE)
(72) Erfinder: Dirnfeldner, Rainer, 91341 Röttenbach (DE)

(56) Entgegenhaltungen:
- EP-A- 0 413 954
- DE-A- 4 029 312
- US-B1- 6 456 438

## Beschreibung

Die Erfindung bezieht sich auf eine Werkzeug- oder Produktionsmaschine, wobei die Maschine einen mittels mindestens einer durchsichtigen Scheibe vom Bediener einsehbaren Arbeitsbereich aufweist.

Fast jede handelsübliche Werkzeug- oder Produktionsmaschine besitzt heutzutage eine Anzeigeeinheit bzw. eine Bedientafel mit Hilfe derer der Fertigungs- bzw. Produktionsvorgang vor Ort parametriert und überwacht werden kann. Als Anzeigeeinheit wird dabei üblicherweise ein Röhren- oder LCD-Bildschirm eingesetzt. Dieser befindet sich gewöhnlich neben oder vor der Maschine als integraler Bestandteil einer Bedientafel oder ist an einem beweglichen sogenannten Galgen montiert.

Die Erfindung beruht auf dem Gedanken, dass als Anzeigeeinheit ein Head-up-Display verwendet wird. Dabei kann das Head-up-Display zusätzlich zur handelsüblichen bestehenden konventionellen Anzeigeeinheit bzw. Bedientafel oder alternativ anstatt der herkömmlichen Anzeigeeinheit bzw. Bedientafel verwendet werden.

Ein Head-up-Display ist eine technische Vorrichtung, mit Hilfe derer Information dem Bediener überlagert dargestellt werden können. Dabei wird das darzustellende Bild in eine durchsichtige Scheibe eingespiegelt, so dass sowohl das Bild, als auch der Hintergrund gleichzeitig sichtbar wird. Head-up-Displays kommen schon seit längerer Zeit in Flugzeugen zum Einsatz und befinden sich gerade in der Fahrzeugtechnik in der Einführungsphase.

Der Arbeitsraum von Werkzeug- oder Produktionsmaschinen ist in der Regel gekapselt und mit mindestens einer Schutztür versehen. Der Arbeitsraum ist dabei in der Regel durch Sichtfenster bzw. durchsichtige Scheiben vom Bediener zu Kontrollzwecken einsehbar. Diese Sichtfenster ermöglichen somit die Überwachung des Fertigungs- bzw. Produktionsvorgangs durch den Bediener. Werden nun eines oder mehrere dieser Sichtfenster oder eine sonstige durchsichtige Abtrennung z.B. aus Glas oder durchsichtigen Kunststoff zum Arbeitsraum der Maschine als Head-up-Display verwendet, so ermöglicht die transparente Darstellung eine enge Bindung der dargestellten Information mit den im Hintergrund sichtbaren Arbeitsraum der Maschine. Diese Konzept eignet sich insbesondere besonders gut für innovative Ansätze bei Inbetriebnahme-, Fertigungs-, Produktions-, Diagnose- und Service-Vorgängen. Dabei besteht die Anforderung, Informationen möglichst gut in Verbindung zu Abläufen im Arbeitsraum der Maschine darzustellen. Durch eine sogenannte kontakt-analoge Darstellung können Informationen visualisiert werden, die in direktem Zusammenhang mit der durch sich überlagernden Umgebungsinformation stehen. Ein besonders hoher Vorteil kann gegebenenfalls durch eine räumlich holographische Darstellung erzielt werden, bei den die Anzeige optisch in den Arbeitsraum der Maschine eindringt und somit mit der Realität verschmilzt.

Der Erfindung liegt daher die Aufgabe zugrunde, mit Hilfe eines Head-up-Displays dem Bediener eine besonders übersichtliche Darstellung von Informationen über den Fertigungs- bzw. Produktionsvorgang und sonstigen auf der Maschine ablaufenden Vorgängen zu ermöglichen.

Diese Aufgabe wird durch eine Werkzeug- oder Produktionsmaschine nach Anspruch 1 gelöst.

Durch die Integration eines Head-up-Displays in bestehende Maschinenkomponenten kann quasi die Anzeigeeinheit bzw. Bedientafel mit der Maschine verschmelzen. Durch die Platzersparnis und die Reduzierung der Komponenten lässt sich somit eine besonders kostengünstige Realisierung einer Anzeige- bzw. Bedientafel realisieren. Die Möglichkeit dem Bediener Informationen mit Hilfe der Head-up-Display-Technik in den Maschinenraum einzublenden ermöglicht grundlegende Innovation im Bereich der Inbetriebnahme, Produktion, Diagnostik und Service. So können beispielsweise Hinweise zu Fehlern beim Fertigungs- bzw. Produktionsvorgang direkt dort eingeblendet werden, wo sie aufgetreten sind. Weiterhin können Arbeitsanweisungen schrittweise bzw. arbeitsschrittabhängig direkt an der Maschine dargestellt werden, so dass diese wesentlich leichter nachvollzogen werden können als es bei einer abstrakten Darstellung an einem herkömmlichen Bildschirm der Fall wäre.

Weiterhin zeichnet sich ein Head-up-Display gegenüber den vorher beschriebenen konventionellen Anzeigeeinheiten bzw. Bedientafeln durch seine besonders hohe Robustheit gegenüber den oft in der Fertigungstechnik vorkommenden problematischen Umweltbedingungen aus.

Eine erste vorteilhafte Ausbildung der Erfindung ist dadurch gekennzeichnet, dass neben dem Visualisieren von Informationen, vom Bediener auch Daten und Befehle zur Steuerung der Maschine über die Scheibe eingebbar sind. Wenn der Head-up-Display neben den reinen Darstellungen von Informationen auch in der Lage ist, Daten und Befehle zur Steuerung der Maschine zu erfassen, kann mittels des Head-up-Displays die herkömmliche Bedientafel ersetzt werden.

In diesem Zusammenhang erweist es sich als vorteilhaft, wenn die vom Bediener eingegebenen Daten und Befehle über mindestens eine Kamera oder mittels einer berührungsempfindlichen Scheibe erfassbar sind. Die eingegebenen Daten und Befehle können solchermaßen besonders sicher erfasst werden.

Ferner erweist es sich als vorteilhaft wenn der Projektionsapparat an der Maschinenaußenseite angebracht ist, da an der Maschinenaußenseite keine so ungünstigen Umweltbedingungen für die Funktionsfähigkeit des Projektionsapparates z.B. hinsichtlich Verschmutzung gegeben sind, wie an der Maschineninnenseite.

Weiterhin er weist es sich als vorteilhaft, wenn als Informationen Betriebsparameter und/oder Arbeitsanweisungen und/oder die graphische Visualisierung von Simulationsergebnissen und/oder die graphische Visualisierung von Arbeitsabläufen vorgesehen sind. Solche Informationen sind für ein Verständnis und Kontrolle des Fertigungs- bzw. Produktionsvorgangs für den Bediener von hohem Interesse.

Ferner erweist es sich als vorteilhaft, wenn vom Head-up-Display eine räumliche holographische Darstellung, die virtuell in den Arbeitsraum der Maschine eindringt, erzeugbar ist. Durch eine räumliche holographische Darstellung, die virtuell in den Arbeitsraum der Maschine eindringt, ist dem Bediener eine besonders übersichtliche optische Kontrolle und Darstellung des Fertigungs- bzw. Produktionsvorgangs möglich.

Ein Ausführungsbeispiel der Erfindung ist in der Zeichnung dargestellt und wird im folgenden näher erläutert. Dabei zeigen:
- FIG 1: eine erfindungsgemäße Werkzeugmaschine und
- FIG 2: eine Darstellung des Head-up-Displays.

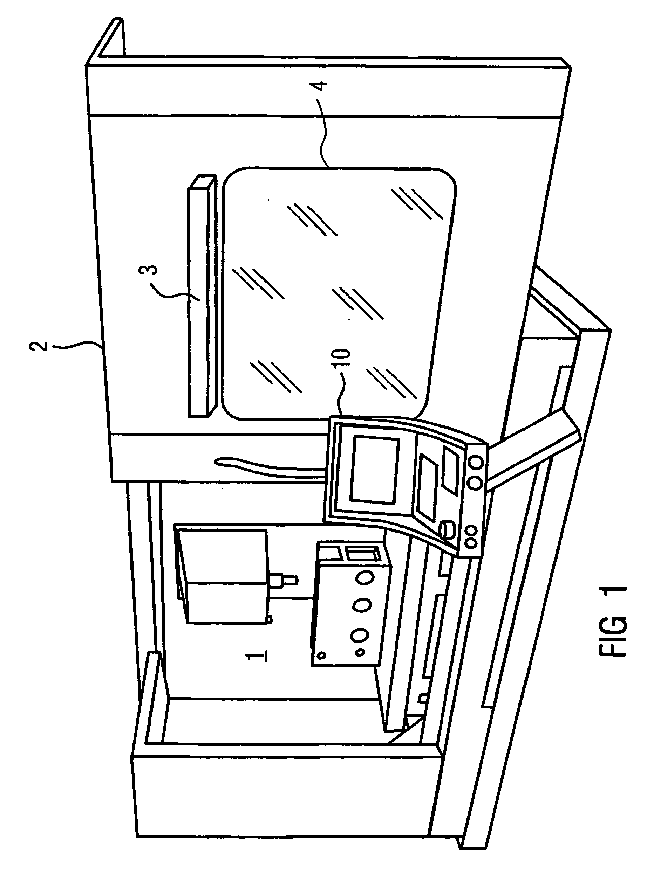

In FIG 1 ist in Form eines Ausführungsbeispiels eine erfindungsgemäße Werkzeugmaschine dargestellt. Der Arbeitsraum 1 der Maschine, in dem der eigentliche Fertigungs- bzw. Produktionsvorgang stattfindet ist im geschlossenen Zustand durch die Schiebetür 2 vom Bediener der Maschine getrennt. In FIG 1 ist die Maschine mit geöffneter Schiebetür 2 dargestellt.

Mittels einer Bedientafel 10 kann die Maschine Vorort bedient werden.

In die Schiebetür 2 ist eine durchsichtige Scheibe 4, die in dem Ausführungsbeispiel aus Glas besteht, eingelassen. Bei geschlossener Schiebetür 2 ermöglicht die Scheibe 4 den Bediener, die Sicht auf den Arbeitsraum 1. Über der Scheibe 4 befindet sich an der Maschinenaußenseite der Schiebetür 2 ein Projektionsapparat 3. Mit Hilfe des Projektionsapparates 3 wird auf die durchsichtige Scheibe 4 das darzustellende Bild eingespiegelt, so dass sowohl das Bild, als auch der Hintergrund einem Betrachter gleichzeitig sichtbar wird.

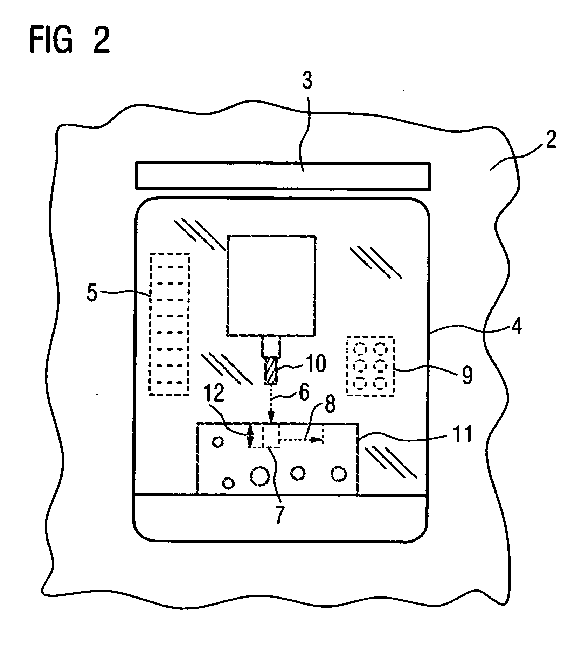

In FIG 2 ist beispielhaft bei geschlossener Schiebetür 2 und angeschaltetem Projektionsapparat 3, die einem Betrachter sich bietende Sicht durch die Scheibe 4 auf den Arbeitsraum 1 dargestellt. Die Bezugszeichen 2, 3 und 4 stimmen mit den aus FIG 1 überein. Durch die Scheibe 4 ist das eingespannte Fräswerkzeug 10 sowie das zu bearbeitende Werkstück 11 erkennbar. Über den Projektionsapparat 3 wird nun auf die Scheibe 4 dem Bediener zusätzliche Informationen eingespiegelt. In den Ausführungsbeispiel wird dem Bediener ein virtuelles Informationsfeld 5, welches schrittweise die Arbeitsabläufe anzeigt, eingespiegelt. Über die vom Projektionsapparat 3 eingespiegelten Pfeile 6, 8 dem eingespiegelten Ausschnitt 7 sowie der eingespiegelten Bemaßung 12, wird dem Bediener der nächste Produktionsschritt dargestellt, der in dem Ausführungsbeispiel aus dem Ausfräsen einer Nut im Werkstück 11 besteht. Anhand dieser virtuell eingespiegelten übersichtlichen Information kann der Betrachter den Fertigungs- bzw. Produktionsvorgang mit hoher Zuverlässigkeit auf einfache Art und Weise überwachen.

Besonders vorteilhaft ist es wenn zusätzlich auf die Scheibe 4, mittels des Projektionsapparates 3, eine räumliche holographische Darstellung eingespiegelt wird, bei dem die Darstellung optisch in den Arbeitsraum 1 der Maschine eindringt und solchermaßen mit den physikalisch vorhandenen Maschinenelementen und/oder Werkstücken optisch verschmilzt. Auf diese Weise ist dem Bediener insbesondere bei Inbetriebnahme-, Diagnose- und Servicevorgängen aber auch während des normalen Fertigungs- bzw. Produktionsvorgangs eine sehr übersichtliche Kontrollmöglichkeit gegeben.

Zusätzlich wird im Ausführungsbeispiel mittels des Projektionsapparates 3 auch noch ein virtuelles Tastaturfeld 9 auf die Scheibe 4 eingespiegelt. Bedienhandlungen am virtuellen Tastaturfeld 9 werden optisch z.B. mittels einer in den Projektionsapparat 3 integrierten Kamera erfasst und der Steuerung der Maschine zur Verfügung gestellt. Mittels des Eingabefeldes 9 und gegebenenfalls noch weiteren Eingabefeldern, die der Übersichtlichkeit halber in FIG 2 nicht mehr dargestellt sind, lässt sich die Maschine Vorort vom Bediener steuern.

Selbstverständlich können die Bedienhandlungen bei einem oder mehreren virtuellen Tastaturfeldern alternativ auch mittels einer berührungsempfindlichen Scheibe erfasst werden, wobei die Scheibe des Sichtfensters vorteilhaft gleich als berührungsempfindliche Scheibe ausgeprägt sein kann. Weiterhin sind selbstverständlich auch noch andere virtuelle Eingabemittel (z.B. virtuelle Maus) als das im Ausführungsbeispiel verwendete virtuelle Tastaturfeld denkbar.

Der aus der Scheibe 4 und dem Produktionsapparat 3 gebildete Head-up-Display kann entweder optional, wie in FIG 1 dargestellt, zur Bedientafel 10 vorhanden sein oder die Bedientafel 10 komplett ersetzen, so dass diese entfallen kann.

Die Größe des Displays ist bei Head-up-Technik im wesentlichen nur durch die zur Verfügung stehende Projektionsfläche d.h. die Größe der Scheibe beschränkt. Dadurch ergibt sich eine große Flexibilität bezüglich der Größe der Anzeige, der Art der Anzeige und der Menge der gleichzeitig dargestellten Informationen. Eine Skalierung der Anzeige gemäß den Anforderungen der Maschine und der Wünsche des Kunden ist problemlos möglich.

Selbstverständlich können mit Hilfe des Head-up-Displays auch im Vorfeld extern erzeugte Simulationsergebnisse eingespielt werden und solchermaßen im Arbeitsraum der Maschine der Produktionsvorgang visuell kontrolliert werden. Eventuell vorhandene Fehler sind somit leicht erkennbar.

An dieser Stelle sei angemerkt, dass als Werkzeugmaschinen z.B. ein- oder mehrachsige Dreh-, Fräs-, Bohr- oder Schleifmaschinen zu verstehen sind. Zu den Werkzeugmaschinen werden auch noch Bearbeitungszentren, lineare und rotatorische Transfermaschinen, Lasermaschinen oder Wälz- und Verzahnmaschinen gezählt. Allen gemeinsam ist, dass ein Material bearbeitet wird, wobei diese Bearbeitung mehrachsig ausgeführt werden kann. Zu den Produktionsmaschinen werden z.B. Textil-, Kunststoff-, Holz-, Glas-, Keramik- oder Steinbearbeitungsmaschinen gezählt. Maschinen der Umformtechnik, Verpackungstechnik, Drucktechnik, Fördertechnik, Pumpentechnik, Lüftertechnik, Hebewerkzeuge sowie Roboter gehören ebenfalls zu den Produktionsmaschinen.

## Patentansprüche

1. Werkzeug- oder Produktionsmaschine, wobei die Maschine einen mittels mindestens einer durchsichtigen Scheibe (4) vom Bediener einsehbaren Arbeitsbereich (1) aufweist, **dadurch gekennzeichnet, dass** die Maschine ein Projektions apparat aufweist, und die Scheibe mittels des Projektionsapparates (3) als Head-up-Display verwendbar ist und solchermaßen dem Bediener Informationen auf der Scheibe (4) visualisierbar sind.

2. Werkzeug- oder Produktionsmaschine nach Anspruch 1, **dadurch gekennzeichnet, dass** neben dem Visualisieren von Informationen, vom Bediener auch Daten und Befehle zur Steuerung der Maschine über die Scheibe (4) eingebbar sind.

3. Werkzeug- oder Produktionsmaschine nach Anspruch 2, **dadurch gekennzeichnet, dass** die vom Bediener eingegebenen Daten und Befehle über mindestens eine Kamera oder mittels einer berührungsempfindlichen Scheibe (4) erfassbar sind.

4. Werkzeug- oder Produktionsmaschine nach einem der vorhergehenden Ansprüche, **dadurch gekennzeichnet, dass** der Projektionsapparat (3) an der Maschinenaußenseite angebracht ist.

5. Werkzeug- oder Produktionsmaschine nach einem der vorhergehenden Ansprüche, **dadurch gekennzeichnet, dass** als Informationen Betriebsparameter und/oder Arbeitsanweisungen und/oder die graphische Visualisierung von Simulationsergebnissen und/oder die graphische Visualisierung von Arbeitsabläufen vorgesehen sind.

6. Werkzeug- oder Produktionsmaschine nach einem der vorhergehenden Ansprüche, **dadurch gekennzeichnet, dass** vom Head-up-Display eine räumliche holographische Darstellung, die virtuell in den Arbeitsraum (1) der Maschine eindringt, erzeugbar ist.

## Claims

1. Machine-tool or production machine, with the machine comprising a working area (1) which can be visible by an operator by means of at least one transparent pane (4), **characterised in that** the machine comprises a projection unit (3), and the pane can be used as a head-up display by means of the projection unit (3) and information can be visible to the user in this way on the pane (4).

2. Machine-tool or production machine according to claim 1, **characterised in that** in addition to the visualisation of information, data and commands for controlling the machine via the pane (4) can be entered by the operator.

3. Machine-tool or production machine according to claim 2, **characterised in that** the data and commands entered by the operator can be recorded by at least one camera or by means of a touch-sensitive pane (4).

4. Machine-tool or production machine according to one of the preceding claims **characterised in that** the projection unit (3) is mounted on the exterior of the machine.

5. Machine-tool or production machine according to one of the preceding claims, **characterised in that** operation parameters, operation instructions, a graphic visualisation of simulated machine processes, and a graphic visualisation of process flows are provided as information.

6. Machine-tool or production machine according to one of the preceding claims, **characterised in that** a three-dimensional holographic visualisation that virtually extends into the workspace (1) of the machine can be generated by the head-up display.

## Revendications

1. Machine-outil ou machine de production, comportant une zone de travail (1) que l'utilisateur peut voir grâce à au moins une vitre (4) transparente, **caractérisée en ce que** la machine comporte un appareil de projection et que la vitre peut servir d'affichage head up à l'aide de l'appareil de projection (3) et des informations peuvent être visualisées de cette manière sur la vitre (4) à l'intention de l'utilisateur:

2. Machine-outil ou machine de production selon la revendication 1, **caractérisée en ce que** par l'intermédiaire de la vitre (4) non seulement il est possible de visualiser des informations, mais l'utilisateur peut aussi entrer des données et des instructions pour commander la machine.

3. Machine-outil ou machine de production selon la revendication 2, **caractérisée en ce que** les données et les instructions entrées par l'utilisateur peuvent être saisies par l'intermédiaire d'au moins une caméra ou à l'aide d'une vitre tactile (4).

4. Machine-outil ou machine de production selon l'une des revendications précédentes, **caractérisée en ce que** l'appareil de projection (3) est disposé du côté extérieur de machine.

5. Machine-outil ou machine de production selon l'une des revendications précédentes, **caractérisée en ce que** les informations sont des paramètres de fonctionnement et/ou des instructions de travail et/ou la visualisation graphique de résultats de simulation et/ou la visualisation graphique de processus de travail.

6. Machine-outil ou machine de production selon l'une des revendications précédentes, **caractérisée en ce que** l'affichage head up peut produire une représentation holographique et spatiale qui entre virtuellement dans l'espace de travail (1) de la machine.
